# EUROPÄISCHE PATENTSCHRIFT

(11) **EP 3 672 817 B1**
(45) Veröffentlichungstag und Bekanntmachung des Hinweises auf die Patenterteilung: **26.07.2023**
(21) Anmeldenummer: 18743732.2
(22) Anmeldetag: 16.07.2018
(51) Int. Cl.: B60G 3/20, B60G 7/00, B60G 13/00

(54) **RADAUFHÄNGUNG FÜR EIN KRAFTFAHRZEUG**
WHEEL SUSPENSION FOR A MOTOR VEHICLE
SUSPENSION DE ROUE POUR VÉHICULE À MOTEUR

(30) Priorität: 22.08.2017 DE 102017214639
(43) Veröffentlichungstag der Anmeldung: 01.07.2020
(73) Patentinhaber: ZF Friedrichshafen AG, 88046 Friedrichshafen (DE)
(72) Erfinder: WALLGREN, Klaus, 85757 Karlsfeld (DE); HEIDSIECK, Knut, 32257 Bünde (DE)
(74) Vertreter: ZF Friedrichshafen AG
(86) Internationale Anmeldenummer: PCT/EP2018/069186
(87) Internationale Veröffentlichungsnummer: WO 2019/037947

(56) Entgegenhaltungen:
- WO-A1-2007/045308
- DE-A1-102010 012 014
- DE-A1-102015 206 340
- DE-A1-102016 200 096
- DE-U1-202017 100 164

## Beschreibung

Die vorliegende Erfindung betrifft ein Kraftfahrzeug umfassend eine Radaufhängung, gemäß dem Oberbegriff des Patentanspruchs 1.

Aus DE 10 2016 200 096 A1 ist eine Radaufhängung für ein Kraftfahrzeug bekannt, die insbesondere für eine antreibbare, lenkbare Hinterachse einsetzbar ist. Ein Radträger, der ein über eine Antriebswelle antreibbares Rad aufnimmt, ist dazu gelenkig mit einem radführenden Lenker verbunden. Der radführende Lenker, bestehend aus einem sich im Wesentlichen in Fahrzeuglängsrichtung erstreckenden Bauteil und einem damit verbundenen, sich im Wesentlichen in Fahrzeugquerrichtung erstreckenden Bauteil, ist über zwei aufbauseitige Lager mit einem Aufbau des Fahrzeugs gelenkig verbunden und kann somit im radträgerseitigen Bereich Höhenbewegungen durchführen.

Der Begriff "Aufbau" sei im Rahmen dieser Patentanmeldung weit auszulegen, insbesondere seien davon sowohl die Karosserie des Fahrzeugs als auch fest damit verbundene Baugruppen wie beispielsweise ein an die Karosserie montierter Achsträger oder damit vergleichbare Anbindungsbauteile zu verstehen.

In DE 10 2016 200 096 A1 sind der radführende Lenker und der Radträger über ein Kugelgelenk derart gelenkig miteinander verbunden, dass der Radträger gegenüber dem radführenden Lenker um eine Lenkachse schwenkbar ist. Die Lenkachse verläuft durch eben dieses Kugelgelenk sowie einen weiteren Gelenkpunkt an einem oberen Ende des Radträgers, in welchem der Radträger gelenkig mit einem Sturzlenker verbunden ist, der an seinem dem Radträger abgewandten Ende wiederum an den Aufbau des Fahrzeugs angelenkt ist. Die so gebildete Lenkachse des Radträgers, verlaufend durch den unteren und oberen Anbindungspunkt des Radträgers kann ihre Lage relativ zum Aufbau des Fahrzeugs abhängig vom Einfederungszustand verändern, es handelt sich somit um eine Lenkachse mit dynamischer Lage gegenüber dem Fahrzeugaufbau. Zur Ermöglichung von Lenkbewegungen des Radträgers um die so gebildete Lenkachse greift ein in Fahrzeugquerrichtung verlaufender Spurlenker an einem hinteren Ende des Radträgers an. Durch translatorische Bewegung des Spurlenkers in Fahrzeugquerrichtung wird der Radträger in Lenkbewegung versetzt, das heißt um die zuvor beschriebene Lenkachse geschwenkt. Das Dokument DE 10 2016 200 096 A1 zeigt den Oberbegriff des Anspruchs 1.

Zur Abstützung des Radträgers, insbesondere der darauf wirkenden Antriebs - oder Verzögerungskräfte beziehungsweise -momente ist der Radträger in einem hinteren Bereich über einen Integrallenker an den radführenden Lenker gekoppelt. Dazu ist ein unteres Ende des Integrallenkers gelenkig mit dem radführenden Lenker verbunden, während ein oberes Ende des Integrallenkers gelenkig mit einem hinteren Ende des Radträgers verbunden ist. Beim Durchführen von Lenkbewegungen wird das obere Ende des Integrallenkers in Fahrzeugquerrichtung verschwenkt.

Aus DE 10 2010 012 014 A1 ist eine weitere Radaufhängung für ein Kraftfahrzeug gemäß den Merkmalen des Oberbegriffs des Anspruchs 1 bekannt. Diese weist ein Feder-Dämpfer-System auf, das sich einerseits am radführenden Lenker und andererseits am Aufbau des Fahrzeugs abstützt, um auf diese Weise betriebsbedingte Schwingungen des radführenden Lenkers zu dämpfen. Die Ausführung des Feder- Dämpfer-Systems als montierbare Baueinheit, wie aus dem genannten Stand der Technik bekannt, beansprucht zumindest in Fahrzeuglängsrichtung sowie in Fahrzeugquerrichtung verhältnismäßig wenig Bauraum.

Für eine modulare Achse, die in mehrere Fahrzeugvarianten eingesetzt wird, ist eine aufgelöste Bauweise mit getrennter Feder und Dämpfer vorzuziehen. Zum einen lässt sich damit die Durchladebreite und/oder die Höhe des Laderaums des betroffenen Fahrzeugs erhöhen, weiterhin kann durch Wahl eines bestimmten Federtyps ein auf das Fahrzeug abgestimmtes, gegebenenfalls sogar verstellbares Federverhalten einfacher erzielt werden, da es aufgrund der Bauteiltrennung weniger Komponentenvarianten gibt.

Daneben sei auf die Patentveröffentlichung WO 2007/045 308 A1 verwiesen. Aus dieser ist eine Radaufhängung für ein Kraftfahrzeug bekannt, die einen Radträger zum Aufnehmen eines Rades, einen radführenden Lenker zum gelenkigen Verbinden des Radträgers mit einem Aufbau, einen den Radträger mit dem Aufbau verbindenden Sturzlenker und ein Lenkmittel zum Lenken des Rades aufweist. Der Radträger und der radführende Lenker sind in einem bezogen auf die Fahrzeuglängsrichtung hinter der Mitte des Rades liegenden Anbindungsbereich unmittelbar, und in einem bezogen auf die Fahrzeuglängsrichtung vor der Radmitte liegenden Anbindungsbereich mittelbar über einen Integrallenker verbunden, so dass der Radträger gegenüber dem radführenden Lenker um eine Lenkachse schwenkbar ist. Ähnlich aufgebaute Radaufhängungen sind aus DE 10 2015 206 340 A1, DE 20 2017 100 164 U1 bekannt.

Es ist eine Aufgabe der vorliegenden Erfindung, ein Kraftfahrzeug mit einer Radaufhängung der eingangs genannten, wie beispielsweise aus DE 10 2010 012 014 A1 oder DE 10 2016 200 096 A1 bekannten Art anzugeben, welches hinsichtlich der Art und Anordnung des Feder-Dämpfer-Systems eine erhöhte Variabilität des Fahrzeugs zulässt. Insbesondere soll die Radaufhängung so gestaltet sein, dass diese zugleich einen Antrieb und eine Lenkbarkeit des Rades zulässt und verbleibenden Bauraum möglichst effizient nutzbar macht für weitere Komponenten, insbesondere das Feder-Dämpfer-System der Radaufhängung.

Die genannte Aufgabe wird gelöst durch ein Kraftfahrzeug mit einer Radaufhängung gemäß den Merkmalen des Patentanspruchs 1. Es handelt sich dabei erfindungsgemäß um ein Kraftfahrzeug, umfassend eine Radaufhängung, wobei die Radaufhängung einen Radträger zum Aufnehmen eines Rades, einen radführenden Lenker zum gelenkigen Verbinden des Radträgers mit einem Aufbau, einen den Radträger mit dem Aufbau verbindenden Sturzlenker und ein Lenkmittel zum Lenken des Rades aufweist. Der Radträger und der radführende Lenker sind in einem ersten Anbindungsbereich unmittelbar und in einem zweiten Anbindungsbereich mittelbar über einen Integrallenker verbunden, so dass der Radträger gegenüber dem radführenden Lenker um eine Lenkachse schwenkbar ist, wobei bezogen auf die Fahrzeuglängsrichtung der erste Anbindungsbereich vor der Mitte des Rades und der zweite Anbindungsbereich hinter der Mitte des Rades ausgebildet ist. Das Kraftfahrzeug mit der Radaufhängung zeichnet sich erfindungsgemäß aus durch ein aufbauseitig angelenktes Fahrwerkelement, das unmittelbar mit dem Radträger verbunden ist.

Bei dem aufbauseitig angelenkten Fahrwerkelement, das unmittelbar mit dem Radträger verbunden ist, kann es sich ganz allgemein um ein beliebiges, im Zusammenhang mit der Radaufhängung stehendes Funktionselement handeln, insbesondere trägt dieses zur Dämpfung und/oder Federung des Rades gegenüber dem Aufbau des Fahrzeugs bei. Indem dieses Fahrwerkelement, abweichend von den aus dem Stand der Technik vorbekannten Radaufhängungen, unmittelbar mit dem Radträger verbunden ist, weist die erfindungsgemäß beschriebene Radaufhängung Vorteile hinsichtlich der Bauraumnutzung sowie der kinematischen Verhältnisse auf. Durch die unmittelbare Verbindung zwischen Fahrwerkelement und Radträger kann sich ein radträgerseitiges Ende des Fahrwerkelements an einem bezogen auf die Fahrzeugmitte weit außen liegenden Punkt, nämlich besonders radnah, abstützen. Dieser Abstützungspunkt kann bei entsprechender Gestaltung des radführenden Lenkers vorteilhaft dazu beitragen, dass das mit dem Radträger unmittelbar verbundene aufbauseitig angelenkte Fahrwerkelement, bei welchem es sich bevorzugt um einen Dämpfer handelt, besonders effektiv (direkt) betrieben werden kann, da eine Einfederung des Rades kinematisch bedingt zu einem verhältnismäßig starken Einrücken des Fahrwerkelements, insbesondere Dämpfers, führt ("feinfühliges Ansprechverhalten").

Wie zuvor bereits erwähnt, handelt es sich bei dem Fahrwerkelement, das aufbeiseitig angelenkt und unmittelbar mit dem Radträger verbunden ist, vorzugsweise um einen Dämpfer.

Gemäß einer vorteilhaften Weiterbildung der Erfindung ist das Fahrwerkelement, insbesondere in Form eines Dämpfers, in Bezug auf eine Fahrzeuglängsrichtung vor der Mitte des Rades und/oder vor einer das Rad antreibenden Antriebswelle angeordnet. Durch diese Anordnung ergibt sich der Vorteil, dass der hinter der Mitte des Rades und/oder hinter einer das Rad antreibenden Antriebswelle befindliche Bauraum für weitere Komponenten des Fahrwerks zur Verfügung steht.

In konstruktiver Hinsicht ist es vorteilhaft, dass die radträgerseitige Verbindung des Fahrwerkelements gegenüber dem Radträger in der Nähe des ersten Anbindungsbereichs angeordnet ist, in welchem der Radträger und der radführende Lenker gelenkig miteinander verbunden sind.

Zweckmäßigerweise sind die beiden Anbindungsbereiche (erster Anbindungsbereich und zweiter Anbindungsbereich) voneinander, insbesondere in Fahrzeuglängsrichtung beabstandet. Verschiedene Anordnungen und Gestaltungen der Anbindungsbereiche sind denkbar.

Gemäß einer vorteilhaften Weiterbildung der Radaufhängung weist der radführende Lenker eine gegenüber der Fahrzeuglängsachse schräg verlaufende Rotationsachse auf, indem der radführende Lenker in zwei Bereichen, insbesondere einem vorderen äußeren Bereich und einem hinteren inneren Bereich, an den Aufbau (des Fahrzeugs) angebunden ist. Die Begriffe "vorderen" und "hinteren" beziehungsweise "äußeren" und "inneren" sind dabei in Bezug auf die Fahrzeuglängsrichtung beziehungsweise Fahrzeugmitte zu verstehen. Der vordere äußere Bereich befindet sich demnach bezogen auf die Fahrzeuglängsrichtung und die Fahrzeugmitte weiter vorne und weiter außen als der hintere innere Bereich. Durch die schräge Rotationsachse des radführenden Lenkers werden unter anderem Vorteile hinsichtlich der Bauraumgestaltung erzielt.

In vorteilhafter Weise weist die Radaufhängung ein Feder-Dämpfer-System in aufgelöster Bauweise auf, das heißt Feder und Dämpfer sind baulich voneinander getrennte Fahrwerkelemente. Bei dem aufbauseitig angelenkten Fahrwerkelement, das unmittelbar mit dem Radträger verbunden ist, handelt es sich bevorzugt um den Dämpfer. Eine bevorzugte Weiterbildung der Radaufhängung sieht vor, dass sich - parallel dazu - der radführende Lenker mittels einer im Wesentlichen in Fahrzeughochrichtung erstreckenden Feder gegenüber dem Aufbau des Fahrzeugs abstützt. Demnach stützen sich Feder und Dämpfer als voneinander getrennte Elemente jeweils einerseits gegenüber dem Aufbau ab, wobei der Dämpfer durch unmittelbare Verbindung mit dem Radträger dessen Bewegungen unmittelbar dämpft, während die Federung gegenüber dem radführenden Lenker erfolgt.

Eine günstige Bauraumausnutzung erzielt die Radaufhängung indem vorteilhaft die Feder in Bezug auf eine Fahrzeuglängsrichtung hinter der Mitte des Rades und/oder hinter einer das Rad antreibenden Antriebswelle angeordnet ist. Allgemein gesagt, kann vorteilhaft die Feder in Bezug auf die Mitte des Rades und/oder eine das Rad antreibende Antriebswelle gegenüberliegend des Dämpfers angeordnet sein. Bei Anordnung der Feder hinter der Radmitte beziehungsweise hinter der zugehörigen Antriebswelle bietet sich der besondere Vorteil, dass für die Feder ein besonders großer Bauraum (in Fahrzeuglängs- und Fahrzeugquerrichtung) zur Verfügung steht.

Dieser besonders große Bauraum lässt die Verwendung einer besonderen Federart, insbesondere einer verstellbaren Feder wie insbesondere einer pneumatisch oder hydraulisch verstellbaren Feder zu. Durch eine Verstellbarkeit der Feder lassen sich vorteilhafte Effekte für das Kraftfahrzeug erzielen, beispielsweise lässt sich der Höhenstand des Kraftfahrzeugs aktiv beeinflussen und/oder lässt sich die Federungscharakteristik (Federhärte) beeinflussen, wodurch sich ein gewünschter Fahrkomfort und auch die Fahrzeugstabilität aktiv verändern lassen. In technischer Hinsicht kann auf vorteilhafte Weise eine pneumatisch oder hydraulisch verstellbare Feder zum Einsatz kommen. Der durch die aufgelöste Bauweise geschaffene Bauraum ermöglicht insbesondere die Verwendung einer pneumatisch verstellbaren Feder, sogenannte Luftfeder.

Gemäß einer vorteilhaften konstruktiven Gestaltung der Radaufhängung weist diese eine zwischen 0,5 und 1 liegende, vorzugsweise etwa 0,7 betragende Federübersetzung auf. Unter der Federübersetzung ist das Verhältnis von Abstand der Feder zur Rotationsachse (des radführenden Lenkers) zu Abstand des Rades von der Rotationsachse zu verstehen. Entscheidend für die Größe des Verhältnisses (Federübersetzung) ist die Schrägstellung der Rotationsachse des radführenden Lenkers gegenüber der Fahrzeuglängsrichtung. Aufgrund der Schrägstellung ist es vorteilhaft möglich, den radführenden Lenker trotz geringer Einbaubreite in Fahrzeugquerrichtung für eine verhältnismäßig hohe Federübersetzung nutzen zu können.

Das Kraftfahrzeug mit der Radaufhängung der zuvor beschriebenen Art kann auf unterschiedliche Weise gestaltet sein. Gemäß einer bevorzugten Weiterbildung sind der radführende Lenker bezogen auf eine Fahrzeughochrichtung in einer unteren Lenkerebene und der den Radträger mit dem Aufbau verbindende Sturzlenker in einer dazu oberen Lenker- ebene angeordnet.

Eine vorteilhafte Bauraumgestaltung ergibt sich, indem der Integrallenker im Wesentlichen innerhalb des Rades angeordnet ist.

Vorzugsweise ist der Integrallenker in einer ersten Anbindung gelenkig mit dem radführenden Lenker und in einer zweiten Anbindung gelenkig mit dem Radträger verbunden.

Eine vorteilhafte Bauraumausnutzung ergibt sich, indem der Integrallenker im ungelenkten Zustand des Rades im Wesentlichen in Fahrzeughochrichtung ausgerichtet ist.

Auf vorteilhafte Weise eignet sich die Radaufhängung dazu, das Rad über eine sich im Wesentlichen in Fahrzeugquerrichtung erstreckende Welle anzutreiben. Die Welle verläuft dabei vorzugsweise zwischen Feder und Fahrwerkelement, bezogen auf die Fahrzeuglängsrichtung. Es sei betont, dass die Radaufhängung sich vorteilhaft zwar zum Antrieb des Rades eignet, jedoch nicht zwingend zum Antrieb des Rades ausgeführt sein muss. Die im Rahmen der Erfindung beschriebenen Merkmale der Radaufhängung eignen sich zugleich für ein angetriebenes Rad wie für ein nicht angetriebenes Rad.

Die Erfindung wird nachfolgend anhand eines in der Zeichnung dargestellten Ausführungsbeispiels beschrieben. In der Zeichnung zeigt:
- Figur 1: eine Radaufhängung (links) für ein Kraftfahrzeug gemäß einem Ausführungsbeispiel der Erfindung in perspektivischer Ansicht von schräg hinten,
- Figur 2: die Radaufhängung gemäß Figur 1 in Draufsicht,
- Figur 3: die Radaufhängung gemäß Figuren 1 und 2 in Ansicht von der Fahrzeugmitte,
- Figur 4: die Radaufhängung in gleicher Ansicht wie in Figur 2 mit Hilfslinien zur Verdeutlichung der Federübersetzung,
- Figur 5: eine Radaufhängung (rechts) für ein Kraftfahrzeug in perpektivischer Ansicht von vorn,
- Figur 6: einen (linken) Teil einer Fahrzeugachse mit einer zentralen Antriebseinheit und einer Radaufhängung in Draufsicht.

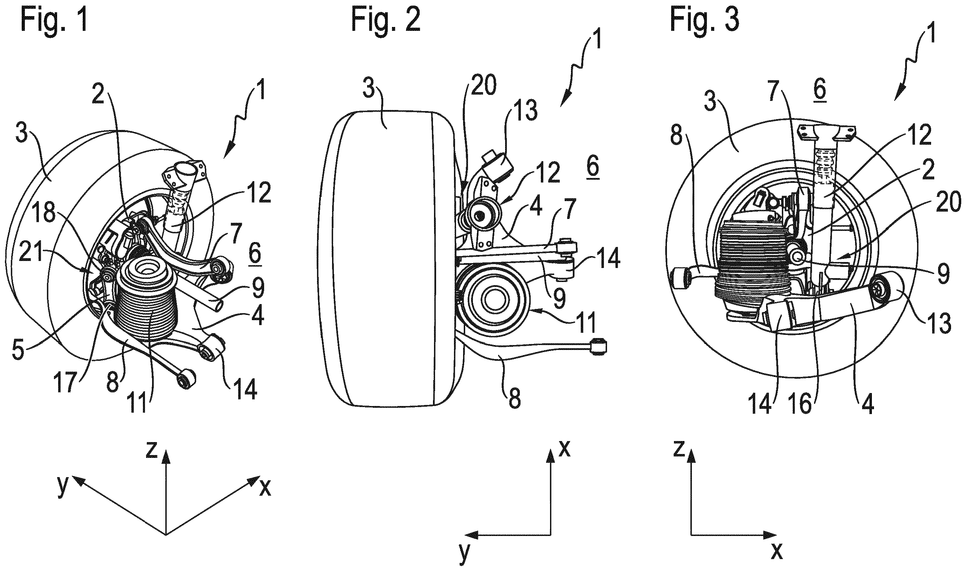

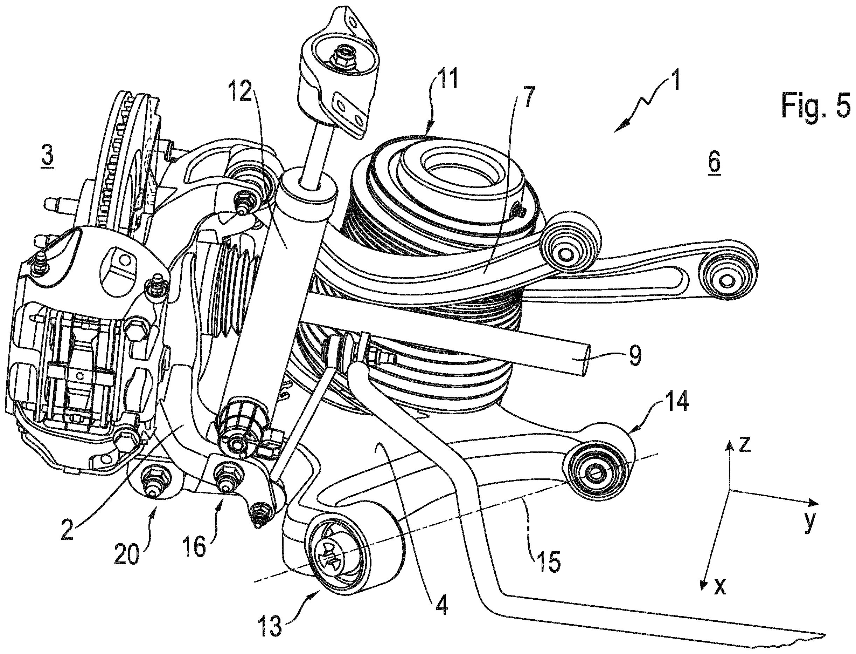

Die Figuren 1 bis 5 der beigefügten Zeichnung beziehen sich auf eine Radaufhängung eines Kraftfahrzeugs gemäß einem bevorzugten Ausführungsbeispiel der Erfindung. Da sich sämtliche Figuren 1 bis 5 auf dasselbe Ausführungsbeispiel beziehen, sind in den verschiedenen Darstellungen gleiche Bauteile mit gleichen Bezugszeichen versehen. Bereits gemachte Erläuterungen zu einzelnen Bauteilen beziehungsweise hinsichtlich des Zusammenwirkens und der Funktion der Radaufhängung sind somit für sämtliche Figuren 1 bis 5 anwendbar. Zur Vermeidung von Wiederholungen wird da- her auf die gesamte Beschreibung des Ausführungsbeispiels verwiesen.

Zur Orientierung enthält jede der Figuren 1 bis 4 ein Koordinatensystem, welches für die jeweilige Darstellung zumindest zwei der folgenden Richtungen angibt: Fahrzeuglängsrichtung x, Fahrzeugquerrichtung y, Fahrzeughochrichtung z. Die Fahrzeuglängsrichtung x entspricht der Vorwärtsfahrtrichtung des Fahrzeugs.

Die Figuren 1 bis 4 zeigen eine Radaufhängung 1 eines Kraftfahrzeugs gemäß einem ersten und einzigen Ausführungsbeispiel der vorliegenden Erfindung aus unterschiedlichen Perspektiven. Konkret handelt es sich um die Radaufhängung eines Hinterrads eines Personenkraftfahrzeugs.

Ein Rad 3 wird dazu von einem Radträger 2 aufgenommen und ist diesem gegenüber um eine Radachse (nicht näher bezeichnet) drehbar gelagert. Die Radaufhängung 1 weist weiterhin einen radführenden Lenker 4 zum gelenkigen Verbinden des Radträgers 2 mit einem Aufbau 6 auf. Bei dem Aufbau 6 (aus Darstellungsgründen nicht gezeigt) kann es sich um die Karrosserie oder einen sogenannten Achsträger handeln, der fest an die Karosserie eines Fahrzeugs montierbar ist. Der Begriff "Auf- bau" sei im Rahmen dieser Patentanmeldung daher weit auszulegen, insbesondere seien davon sowohl die Karosserie des Fahrzeugs als auch fest damit verbundene Baugruppen wie beispielsweise ein an die Karosserie montierter Achsträger oder damit vergleichbare Anbindungsbauteile zu verstehen.

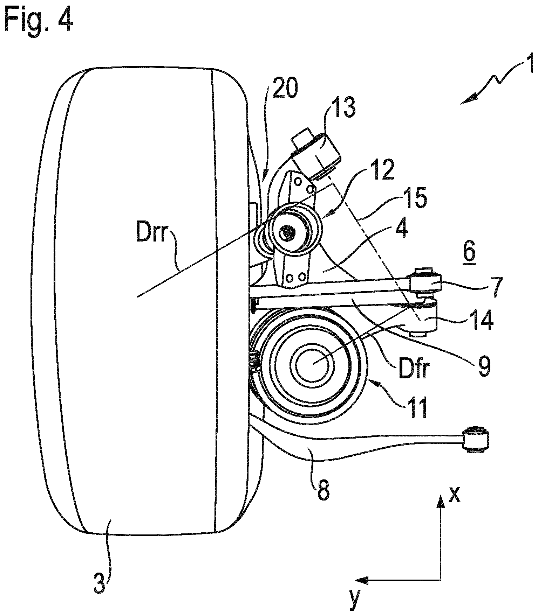

Bei dem radführenden Lenker 4 handelt es sich um ein einteiliges, annähernd trapezförmiges Bauteil, das ein vorderes aufbauseitiges Lager 13 und ein hinteres aufbauseitiges Lager 14 aufweist, wobei der radführende Lenker 4 mittels der Lager 13, 14 schwenkbeweglich gegenüber dem Aufbau 6 derart gelagert ist, dass der radführende Lenker 4 um eine Rotationsachse 15 (vergleiche Figur 4) gegenüber dem Aufbau 6 schwenkbar ist. Wie der Darstellung in Figur 4 (Draufsicht) zu entnehmen, weist die Rotationsachse 15 eine Schrägung gegenüber der Fahrzeuglängsachse x auf, die zwischen 10° und 45° beträgt. Aufgrund dieser Schrägung gegenüber der Fahrzeuglängsachse x lässt sich der radführende Lenker 4 auch als "Schräglenker" - in Abgrenzung zu einem Querlenker - bezeichnen.

Der radführende Lenker 4 ist auf besondere Weise mit dem Radträger 2 verbunden. In einem ersten Anbindungsbereich 20 ist der Radträger unmittelbar mit dem radführenden Lenker 4 über ein Kugelgelenk verbunden. Dieser erste Anwendungsbereich 20, angedeutet durch Pfeile in den Figuren 2, 3 und 4 befindet sich bezogen auf die Fahrzeuglängsrichtung x vor der Mitte des Rades 3. Der Radträger 2 ist weiterhin in einem zweiten Anbindungsbereich 21 (vergleiche Figur 1) mittelbar über einen Integrallenker 5 mit dem radführenden Lenker 4 verbunden. Bei dem Integrallenker 5 handelt es sich um einen Zweipunktlenker, der mit seinem unteren Ende über eine erste Anbindung 17 gelenkig mit dem radführenden Lenker 4 verbunden ist. Ein oberes Ende des Integrallenkers 5 ist über eine zweite Anbindung 18 gelenkig mit dem Radträger 2 verbunden. Der das Rad 3 aufnehmende Radträger 2 ist damit auf besondere, nachfolgend erläuterte Weise mit dem radführenden Lenker 4 verbunden beziehungsweise mit diesem gekoppelt.

Zur Ermöglichung einer Lenkbarkeit des Rades 3 ist der Radträger 2 gegenüber dem radführenden Lenker 4 um eine Lenkachse schwenkbar. Die Anbindung zwischen Radträger 2 und radführendem Lenker 4 über den ersten Anbindungsbereich 20 und den zweiten Anbindungsbereich 21 befindet sich dabei in einer unteren Lenkerebene. Zur Festlegung des Sturzwinkels des Rades 3 weist die Radaufhängung1 weiter- hin einen Sturzlenker 7 auf, der in einer demgegenüber oberen Lenkerebene angeordnet ist. Der Sturzlenker 7, am besten zu sehen in Figur 1, ist ein annähernd c- förmiges Bauteil, das sich im Wesentlichen in Fahrzeugquerrichtung y erstreckt. Aufbauseitig ist der Sturzlenker 7 gelenkig mit dem Aufbau 6 verbunden, radträgerseitig ist der Sturzlenker 7 mit einem nach schräg vorn abragenden Arm des Radträgers 2 verbunden. Auf diese Weise ist der Radträger 2 in der unteren Lenkerebene über den radführenden Lenker 4 und in der oberen Lenkerebene über den Sturzlenker 7 mit dem Aufbau 6 verbunden. Der Radträger 2 ist dadurch um eine Lenkachse schwenkbar, welche durch den ersten Anbindungsbereich 20 und ein den Sturzlenker 7 mit dem Radträger 2 verbindendes Gelenk hindurch verläuft. Abhängig vom Einfederungszustand des radführenden Lenkers 4 kann die so gebildete Lenkachse (durch die beschriebenen Punkte) ihre Relativposition gegenüber dem Aufbau 6 des Fahrzeugs verändern.

Zur Abstützung von auf den Radträger 2 wirkenden Drehmomenten um die Drehachse des Rades 3 ist der Radträger 2 - neben der unmittelbaren Verbindung im ersten Anbindungsbereich 20 - in dem zweiten Anbindungsbereich 21 mittelbar mit dem radführenden Lenker 4 gekoppelt. Diese mittelbare Kopplung erfolgt über den bereits beschriebenen Integrallenker 5. Im ungelenkten Zustand des Rades 3 ist der Integrallenker 5 im Wesentlichen in Fahrzeughochrichtung z ausgerichtet, wie Figur 1 zu entnehmen. Über die obere Anbindung 18 ist der Integrallenker 5 gelenkig mit einem nach hinten abragenden Arm des Radträgers 2 verbunden, während er über die untere Anbindung 17 gelenkig mit dem radführenden Lenker 4 in dessen hinteren Be- reich verbunden ist.

Zum Lenken des Rades 3 ist der Radträger 2, wie beispielsweise in den Figuren 1 und 2 zu sehen, mit einem nach hinten abragenden Arm gelenkig mit einem radträgerseitigen Ende eines Spurlenkers 8 verbunden. Der Spurlenker 8 ist als längliches Bauteil ausgeführt und erstreckt sich im Wesentlichen in Fahrzeugquerrichtung y. Zur Realisierung einer aktiven Lenkung des Rades 3 lässt sich der Spurlenker 8 mit einem am Aufbau 6 angeordneten Lenksteller (Aktuator, nicht gezeigt) verbinden. Zur Durchführung aktiver Lenkbewegungen wird dann mittels des Lenkstellers der Spurlenker 8 in Fahrzeugquerrichtung y bewegt, die Querbewegung wird über den Spurlenker 8 auf den hinteren Bereich des Radträgers 2 übertragen. Als Folge dieser Querbewegung schwenkt der Radträger 2 um seine zuvor beschriebene Lenkachse.

Es sei angemerkt, dass die Radaufhängung 1 alternativ mit einer passiven Lenkung ausgestattet sein kann. In diesem Fall ist das vorgesehene Lenkmittel jeweils als Spurlenker ausgebildet. Ein solcher Spurlenker ist radträgerseitig ebenfalls (wie im Fall einer aktiven Lenkung der Spurlenker 8) mit einem nach hinten abragenden Arm des Radträgers verbunden. Auch der Spurlenker ist als - ähnlich zum Spurlenker eine aktiven Lenkung - längliches Bauteil ausgeführt und erstreckt sich im Wesentlichen in Fahrzeugquerrichtung mit einer aufbauseitigen gelenkigen Anbindung an das Fahrzeug. Ein Lenksteller (Aktuator) entfällt in diesem Fall, die Einflussnahme erfolgt, im Fall einer passiven Lenkung ausschließlich über den Radhub.

Die Radaufhängung 1 ist mit einem Feder-Dämpfer-System versehen. Im erfindungsgemäßen Ausführungsbeispiel nach Figuren 1-4 weist das Feder-Dämpfer- System der Radaufhängung 1 eine aufgelöste Bauweise auf, das heißt, dass eine Feder 11 und ein Dämpfer 12 als voneinander getrennte Bauteile separat angeordnet sind. Bei dem Dämpfer 12 handelt es sich um ein längliches im Wesentlichen in Fahrzeughochrichtung z ausgerichtetes Bauteil. Ein oberes Ende des Dämpfers 12 ist mit dem Aufbau 6 des Fahrzeugs verbunden, während ein unteres Ende des Dämpfers 12 über ein Dämpferlager 16 (siehe Figur 3) unmittelbar mit dem Radträger 2 verbunden ist. Der Dämpfer 12 ist demnach so angeordnet, dass dieser sämtlichen durch Ein- beziehungsweise Ausfedern bedingten Höhenbewegungen des Radträgers 2 durch Ein- beziehungsweise Ausrücken folgt und diese dämpft. Aufgrund der unmittelbaren Verbindung mit dem Radträger 2 werden die Hubbewegungen des Radträgers 2 unmittelbar, das heißt ohne Zwischenschaltung anderer Fahr- werksbauteile, auf den Dämpfer 12 übertragen. Wie Figuren 2 beziehungsweise 3 zu entnehmen, ist der Dämpfer 12 in Bezug auf die Fahrzeuglängsrichtung x vor der Mitte des Rades 3 und zugleich vor einer das Rad 3 antreibenden Antriebswelle 9 angeordnet. Die radträgerseitige Verbindung des Dämpfers 12 mit dem Radträger 2 ist in der Nähe des ersten Anbindungsbereichs 20 angeordnet, in welchem der Rad- träger 2 unmittelbar gelenkig (über ein Kugelgelenk) mit dem radführenden Lenker 4 verbunden ist.

Die Radaufhängung 1 weist weiterhin die Feder 11 auf, die im gezeigten Ausführungsbeispiel als Luftfeder ausgeführt ist. Anders als der Dämpfer 12 ist die Feder 11 in Bezug auf die Fahrzeuglängsrichtung x hinter der Mitte des Rades 3 und zugleich hinter der das Rad 3 antreibenden Antriebswelle 9 angeordnet, wie beispielsweise den Figuren 2 und 3 zu entnehmen. Ein unteres Ende der Feder 11 liegt auf dem radführenden Lenker 4 auf. Ein oberes Ende der Feder 11 - bezogen auf die Fahrzeughochrichtung z - stützt sich gegenüber dem Aufbau 6 des Fahrzeugs ab. Die Feder 11 ist somit zwischen radführendem Lenker 4 und Aufbau 6 angeordnet und wirkt zwischen diesen. Bei einem Einfedern des Rades 3 wird das untere Ende der Feder 11 über den radführenden Lenker 4, der mit dem Radträger 2 verbunden ist, in Richtung des Aufbaus 6 (in Fahrzeughochrichtung z) angehoben. Die Feder 11 wird dabei komprimiert und entwickelt eine mit zunehmender Kompression steigende Rückstellkraft, die der Einfederung entgegenwirkt.

Dadurch dass der Dämpfer 12 vor der Radmitte beziehungsweise vor der Antriebswelle 9 angeordnet ist, steht der Feder 11 ein verhältnismäßig großer Bauraum zur Verfügung, welcher in Bezug auf die Darstellung von Figur 2 in Fahrzeuglängsrichtung x nach vorne durch die Antriebswelle 9 beziehungsweise den Sturzlenker 7 und nach hinten durch den Spurlenker 8 begrenzt wird. Der verhältnismäßig große Bau- raum für die Feder 11 ermöglicht es, die Feder 11 als hinsichtlich der Federcharakteristik verstellbare Luftfeder auszuführen. Alternativ könnte es sich um eine hydraulisch verstellbare Feder handeln. Es sei darauf hingewiesen, dass sich die Vorteile der Erfindung grundsätzlich auch mit einer nicht verstellbaren Feder erzielen lassen. Eine verstellbare Feder bietet jedoch Vorteile hinsichtlich des Komforts und der Anpassbarkeit an unterschiedliche Betriebssituationen. Bei einer Luftfeder lässt sich beispielsweise durch eine Veränderung des Luftdrucks im Federbalg eine Höhenverstellung des Fahrzeugs vornehmen.

Es wurde bereits erwähnt, dass der radführende Lenker 4 eine gegenüber der Fahrzeuglängsachse x schräg verlaufende Rotationsachse 15 aufweist, wie insbesondere Figur 4 zu entnehmen. Aufgrund der Schrägung sowie der im gezeigten Ausführungsbeispiel gewählten Anordnung von Feder 11 und Dämpfer 12 weist die Radaufhängung 1 eine in Bezug auf die Feder 11 günstige Wirksamkeit auf. Zur Erläuterung sind in Figur 4 drei Hilfslinien eingezeichnet. Dabei handelt es sich zunächst um die zwischen dem vorderen Lager 13 und dem hinteren Lager 14 des radführenden Lenkers 4 verlaufende Rotationsachse 15. Als weitere Hilfslinien sind eingezeichnet ein Abstand Dfr der Feder 11 von der Rotationsachse 15 sowie ein Abstand Drr des Rades 3 von der Rotationsachse 15. Aus einem Längenvergleich der beiden Abstände (Feder 11 sowie Rad 3 jeweils von der Rotationsachse 15) ergibt sich die Federübersetzung für die Feder 11. Im gezeigten Ausführungsbeispiel beträgt diese Federübersetzung einen Wert von etwa 0,7. Diese ist angesichts der verhältnismäßig kompakten Bauform der Radaufhängung 1 insbesondere im Bezug auf die verhältnismäßig kurze Länge der verwendeten Lenkerbauteile, vergleichsweise hoch.

Aufgrund der erfindungsgemäß vorgesehenen unmittelbaren Verbindung des Dämpfers 12 mit dem Radträger 2 wird auf vergleichbare Weise auch für den Dämpfer 12 eine günstige Wirksamkeit erzielt. Aufgrund der vorder- und hinterseitigen Anordnung von Dämpfer 12 und Feder 11 (vor und hinter der Antriebswelle 9) erzielt die Radaufhängung 1 eine günstige Bauraumausnutzung.

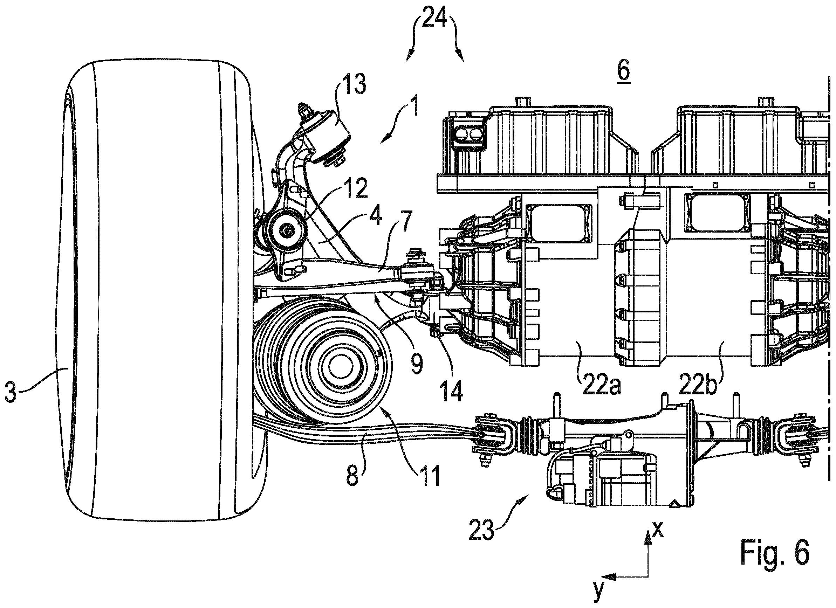

Fig. 6 zeigt zur Verdeutlichung des Gesamtzusammenhangs einen Teil einer Fahrzeugachse 24 in Draufsicht. Die Fahrzeugachse 24 umfasst als wesentliche Bestand- teile eine zentrale Antriebseinheit 22a, 22b und zwei Radaufhängungen 1, von denen aus Darstellungsgründen nur die in Bezug auf die Fahrzeuglängsrichtung x linke Radaufhängung 1 zu sehen ist. Die gezeigte (linke) Radaufhängung 1 entspricht strukturell und hinsichtlich der Bezugszeichen der anhand der Fig. 1 bis 5 beschriebenen Radaufhängung 1, weshalb diesbezügliche wiederholte Erläuterungen unter Verweis auf die dortigen Ausführungen vermieden werden.

Wie bereits erwähnt, weist die Fahrzeugachse 24 eine zentral angeordnete Antriebseinheit 22a, 22b auf. Im gezeigten Ausführungsbeispiel enthält die Antriebseinheit zwei elektrische Antriebsmotoren, wozu die Antriebseinheit in einen linken Teil 22a und einen rechten Teil 22b (jeweils in Fahrzeuglängsrichtung x betrachtet) gegliedert ist. Der linke Teil 22a befindet sich dabei links von der Fahrzeugmitte und ist über die Antriebswelle 9 mit dem Rad 3 der (dargestellten) linken Radaufhängung 1 in Antriebsverbindung bringbar. Der rechte Teil 22b befindet sich dabei rechts von der Fahrzeugmitte und ist ebenfalls über eine (nicht gezeigte) Antriebswelle mit einem Rad einer (nicht dargestellten) rechten Radaufhängung in Antriebsverbindung bring- bar. Die der rechten Fahrzeugseite zugehörigen Bauteile entsprechen hinsichtlich Aufbau und Funktion denen der (gezeigten) linken Fahrzeugseite, sind demgegenüber jedoch spiegelbildlich ausgebildet bzw. angeordnet.

Indem das Rad jeder Fahrzeugseite über eine eigene Antriebseinheit 22a (links) oder 22b (rechts) antreibbar ist, lässt sich das auf die Räder übertragene Antriebsmoment einzeln beeinflussen (sogenanntes "Torque-Vectoring"), wodurch sich in unterschiedlichen Fahrsituationen verbesserte Fahreigenschaften erzielen lassen.

Der Darstellung in Fig. 6 ist zu entnehmen, dass die Antriebseinheit 22a, 22b eine erhebliche bauliche Breite in Fahrzeugquerrichtung y aufweist. Die Fahrzeugachse 24 ist so gestaltet, dass sie trotz dieser baulichen Breite seitlich je eine Radaufhängung 1 aufweist, die einen Radantrieb ermöglicht, die lenkbar ist und die hohen fahr- dynamischen Ansprüchen genügt. Dies wird insbesondere dadurch ermöglicht, dass sämtliche Anbindungsbereiche 13, 14 des unteren radführenden Lenkers 4 in Bezug auf die Fahrzeugquerrichtung y außerhalb der zentral angeordneten Antriebseinheit 22 positioniert sind. Damit die Fahrzeugachse zugleich einen hohen Federungskomfort aufweist, ist der untere radführende Lenker 4 in einem vorderen (äußeren) Be- reich 13 und in einem hinteren (demgegenüber innen liegenden) Bereich 14 an den Aufbau 6 anbindbar ist und weist eine gegenüber der Fahrzeuglängsachse x schräg verlaufende Rotationsachse auf. Durch die schräg verlaufende Rotationsachse ergeben sich die bereits zuvor in der Beschreibung erläuterten Vorteile hinsichtlich der Übersetzungsverhältnisse für Feder 11 und Dämpfer 12.

In Fig. 6 ist weiterhin zu sehen, dass die Fahrzeugachse 24 mit einer aktiven Lenkung ausgestattet ist. Dazu ist das dem Rad 3 abgewandte Ende des Spurlenkers 8 der linken Radaufhängung 1 mit einem Lenksteller 23 verbunden, der zentral hinter der Antriebseinheit 22a, 22b aufbauseitig angeordnet ist. Der Lenksteller 23 enthält einen elektrischen Aktuator und eignet sich dazu, das mit ihm verbundene Ende des Spurlenkers 8 translatorisch (in Fahrzeugquerrichtung y) zu bewegen, um so eine Lenkbewegung des Rades 3 zu verursachen. Bei dem Lenksteller 23 handelt es sich um einen sogenannten Zentralsteller, das heißt, dass an den Lenksteller 23 auf gleichartige Weise ein Spurlenker der (in Fig. 6 nicht vollständig dargestellten) rechten Radaufhängung angebunden ist. Eine Betätigung des Lenkstellers 23 verursacht somit zugleich eine Lenkbewegung der linken Radaufhängung 1 und der rechten Radaufhängung.

### Bezugszeichen

- 1: Radaufhängung
- 2: Radträger
- 3: Rad
- 4: radführender Lenker
- 5: Integrallenker
- 6: Aufbau
- 7: Sturzlenker
- 8: Spurlenker
- 9: Antriebswelle
- 11: Luftfeder
- 12: Dämpfer
- 13: vorderes Lager
- 14: hinteres Lager
- 15: Rotationsachse
- 16: Dämpferlager
- 17: erste Anbindung Integrallenker
- 18: zweite Anbindung Integrallenker
- 20: erster Anbindungsbereich
- 21: zweiter Anbindungsbereich
- 22a: elektrische Antriebseinheit (linker Teil)
- 22b: elektrische Antriebseinheit (rechter Teil)
- 23: Lenksteller
- 24: Fahrzeugachse
- Dfr: Abstand Feder-Rotationsachse
- Drr: Abstand Rad-Rotationsachse
- x: Fahrzeuglängsrichtung
- y: Fahrzeugquerrichtung
- z: Fahrzeughochrichtung

## Patentansprüche

1. Kraftfahrzeug umfassend eine Radaufhängung (1) , wobei die Radaufhängung (1) einen Radträger (2) zum Aufnehmen eines Rades (3), einen radführenden Lenker (4) zum gelenkigen Verbinden des Radträgers (2) mit einem Aufbau (6), einen den Radträger (2) mit dem Aufbau
(6) verbindenden Sturzlenker (7) und ein Lenkmittel (8) zum Lenken des Rades (3) aufweist, wobei der Radträger (2) und der radführende Lenker (4) in einem ersten Anbindungsbereich (20) unmittelbar und in einem zweiten Anbindungsbereich (21) mittelbar über einen Integrallenker (5) verbunden sind, so dass der Radträger (2) gegenüber dem radführenden Lenker (4) um eine Lenkachse schwenkbar ist, wobei bezogen auf die Fahrzeuglängsrichtung (x) der erste Anbindungsbereich (20) vor der Mitte des Rades (3) und der zweite Anbindungsbereich (21) hinter der Mitte des Rades (3) ausgebildet ist, **gekennzeichnet durch** ein aufbauseitig angelenktes Fahrwerkelement (12), das unmittelbar mit dem Radträger (2) verbunden ist.

2. Kraftfahrzeug nach Anspruch 1, **dadurch gekennzeichnet, dass** es sich bei dem Fahrwerkelement um einen Dämpfer (12) handelt.

3. Kraftfahrzeug nach Anspruch 1 oder 2, **dadurch gekennzeichnet, dass** das Fahrwerkelement (12) in Bezug auf eine Fahrzeuglängsrichtung (x) vor der Mitte des Rades (3) und/oder vor einer das Rad (3) antreibenden Antriebswelle (9) angeordnet ist.

4. Kraftfahrzeug nach einem der vorigen Ansprüche, **dadurch gekennzeichnet, dass** die radträgerseitige Verbindung des Fahrwerkelements (12) gegenüber dem Radträger (2) in der Nähe des ersten Anbindungsbereichs (20) angeordnet ist.

5. Kraftfahrzeug nach einem der vorigen Ansprüche, **dadurch gekennzeichnet, dass** der radführende Lenker (4) eine gegenüber der Fahrzeuglängsachse (x) schräg verlaufende Rotationsachse (15) aufweist, indem der radführende Lenker (4) in zwei Bereichen, insbesondere einem vorderen äußeren Bereich (13) und einem hinteren inneren Bereich (14), an den Aufbau (6) angebunden ist.

6. Kraftfahrzeug nach einem der vorigen Ansprüche, **dadurch gekennzeichnet, dass** sich der radführende Lenker (4) mittels einer im Wesentlichen in Fahrzeughochrichtung (z) erstreckenden Feder (11) gegenüber dem Aufbau (6) abstützt.

7. Kraftfahrzeug nach Anspruch 6, **dadurch gekennzeichnet, dass** die Feder (11) in Bezug auf eine Fahrzeuglängsrichtung (x) hinter der Mitte des Rades (3) und/oder hinter einer das Rad (3) antreibenden Antriebswelle (9) angeordnet ist.

8. Kraftfahrzeug nach Anspruch 6 oder 7, **dadurch gekennzeichnet, dass** diese eine zwischen 0,5 und 1 liegende, vorzugsweise etwa 0,7 betragende Federübersetzung aufweist, wobei unter der Federübersetzung das Verhältnis von Abstand (Dfr) der Feder (11) von der Rotationsachse (15) zu Abstand (Drr) des Rades (3) von der Rotationsachse (15) zu verstehen ist.

9. Kraftfahrzeug nach einem der Ansprüche 7 bis 8, **dadurch gekennzeichnet, dass** die Feder (11) insbesondere pneumatisch oder hydraulisch verstellbar ausgeführt ist.

10. Kraftfahrzeug nach einem der vorigen Ansprüche, **dadurch gekennzeichnet, dass** der radführende Lenker (4) bezogen auf eine Fahrzeughochrichtung (z) in einer unteren Lenkerebene und der den Radträger (2) mit dem Aufbau (6) verbindende Sturzlenker (7) in einer dazu oberen Lenkerebene angeordnet sind.

11. Kraftfahrzeug nach einem der vorigen Ansprüche, **dadurch gekennzeichnet, dass** der Integrallenker (5) im Wesentlichen innerhalb des Rades (3) angeordnet ist.

12. Kraftfahrzeug nach einem der vorigen Ansprüche, **dadurch gekennzeichnet, dass** der Integrallenker (5) im ungelenkten Zustand des Rades (3) im Wesentlichen in Fahrzeughochrichtung (z) ausgerichtet ist.

13. Kraftfahrzeug nach einem der vorigen Ansprüche, **dadurch gekennzeichnet, dass** der Integrallenker (5) in einer ersten Anbindung (17) gelenkig mit dem radführenden Lenker (4) und in einer zweiten Anbindung (18) gelenkig mit dem Radträger (2) verbunden ist.

14. Kraftfahrzeug nach einem der Ansprüche 6 bis 13, **dadurch gekennzeichnet, dass** das Rad (3) über eine sich im Wesentlichen in Fahrzeugquerrichtung (y) erstreckende Welle (7) antreibbar ist, die bezogen auf die Fahrzeuglängsrichtung (x) zwischen Feder (11) und Fahrwerkelement (12) verläuft.

## Claims

1. Motor vehicle comprising a wheel suspension (1), wherein the wheel suspension (1) has a wheel carrier (2) for receiving a wheel (3), a wheel-guiding link (4) for the articulated connection of the wheel carrier (2) to a body (6), a camber link (7) which connects the wheel carrier (2) to the body (6), and a steering means (8) for steering the wheel (3), wherein the wheel carrier (2) and the wheel-guiding link (4) are connected to one another directly in a first connecting region (20) and indirectly in a second connecting region (21) by means of an integral link (5), such that the wheel carrier (2) can be pivoted about a steering axle in relation to the wheel-guiding link (4), wherein, in relation to the vehicle longitudinal direction (x), the first connecting region (20) is configured in front of the centre of the wheel (3) and the second connecting region (21) is configured behind the centre of the wheel (3), **characterized by** a chassis element (12) which is deflected on the body side and which is connected directly to the wheel carrier (2).

2. Motor vehicle according to Claim 1, **characterized in that** the chassis element is a damper (12).

3. Motor vehicle according to Claim 1 or 2, **characterized in that**, in relation to the vehicle longitudinal direction (x), the chassis element (12) is arranged in front of the centre of the wheel (3) and/or in front of a drive shaft (9) which drives the wheel (3).

4. Motor vehicle according to one of the preceding claims, **characterized in that**, in relation to the wheel carrier (2), the wheel-carrier-side connection of the chassis element (12) is arranged in the vicinity of the first connecting region (20).

5. Motor vehicle according to one of the preceding claims, **characterized in that** the wheel-guiding link (4) has an axis of rotation (15) which runs obliquely in relation to the vehicle longitudinal axis (x), by virtue of the wheel-guiding link (4) being attached to the body (6) in two regions, in particular a front outer region (13) and a rear inner region (14).

6. Motor vehicle according to one of the preceding claims, **characterized in that** the wheel-guiding link (4) is supported in relation to the body (6) by means of a spring (11) which extends substantially in a vehicle vertical direction (z).

7. Motor vehicle according to Claim 6, **characterized in that**, in relation to a vehicle longitudinal direction (x), the spring (11) is arranged behind the centre of the wheel (3) and/or behind a drive shaft (9) which drives the wheel (3).

8. Motor vehicle according to Claim 6 or 7, **characterized in that** it has a spring ratio which lies between 0.5 and 1 and which is preferably approximately 0.7, the spring ratio being understood to mean the ratio of distance (Dfr) of the spring (11) from the axis of rotation (15) to distance (Drr) of the wheel (3) from the axis of rotation (15).

9. Motor vehicle according to one of Claims 7 to 8, **characterized in that** the spring (11) is in particular embodied to be pneumatically or hydraulically adjustable.

10. Motor vehicle according to one of the preceding claims, **characterized in that**, in relation to a vehicle vertical direction (z), the wheel-guiding link (4) is arranged in a lower link plane and the camber link (7) connecting the wheel carrier (2) to the body (6) is arranged in an, in this respect, upper link plane.

11. Motor vehicle according to one of the preceding claims, **characterized in that** the integral link (5) is arranged substantially within the wheel (3).

12. Motor vehicle according to one of the preceding claims, **characterized in that**, in the non-steered state of the wheel (3), the integral link (5) is oriented substantially in a vehicle vertical direction (z).

13. Motor vehicle according to one of the preceding claims, **characterized in that** the integral link (5) is connected to the wheel-guiding link (4) in an articulated manner in a first connection (17) and to the wheel carrier (2) in an articulated manner in a second connection (18).

14. Motor vehicle according to one of Claims 6 to 13, **characterized in that** the wheel (3) can be driven via a shaft (7) which extends substantially in a vehicle transverse direction (y) and which runs between the spring (11) and the chassis element (12) in relation to the vehicle longitudinal direction (x).

## Revendications

1. Véhicule automobile comprenant une suspension de roue (1), la suspension de roue (1) comprenant un porte-roue (2) pour recevoir une roue (3), un bras (4) de guidage de roue pour relier de manière articulée le porte-roue (2) à une caisse (6), un bras de carrossage (7) reliant le porte-roue (2) à la caisse (6) et un moyen de direction (8) pour diriger la roue (3), le porte-roue (2) et le bras (4) de guidage de roue étant reliés directement dans une première zone de liaison (20) et indirectement dans une deuxième zone de liaison (21) par une biellette intégrale (5), de sorte que le porte-roue (2) est apte à pivoter autour d'un axe de direction par rapport au bras (4) de guidage de roue, la première zone de liaison (20) étant réalisée devant le centre de la roue (3) et la deuxième zone de liaison (21) étant réalisée derrière le centre de la roue (3), par rapport à la direction longitudinale (x) du véhicule, **caractérisé par** un élément de suspension (12) articulé côté caisse, qui est relié directement au porte-roue (2).

2. Véhicule automobile selon la revendication 1, **caractérisé en ce que** l'élément de suspension est un amortisseur (12).

3. Véhicule automobile selon la revendication 1 ou la revendication 2, **caractérisé en ce que** l'élément de suspension (12) est agencé, par rapport à une direction longitudinale (x) du véhicule, devant le centre de la roue (3) et/ou devant un arbre d'entraînement (9) entraînant la roue (3).

4. Véhicule automobile selon l'une des revendications précédentes, **caractérisé en ce que** la liaison côté porte-roue de l'élément de suspension (12) est, par rapport au porte-roue (2), agencée au voisinage de la première zone de liaison (20).

5. Véhicule automobile selon l'une des revendications précédentes, **caractérisé en ce que** le bras (4) de guidage de roue présente un axe de rotation (15) qui s'étend de façon oblique par rapport à l'axe longitudinal (x) du véhicule, faisant que le bras (4) de guidage de roue est relié à la caisse (6) par deux zones, notamment une zone extérieure avant (13) et une zone intérieure arrière (14).

6. Véhicule automobile selon l'une des revendications précédentes, **caractérisé en ce que** le bras (4) de guidage de roue s'appuie contre la caisse (6) au moyen d'un ressort (11) s'étendant sensiblement dans la direction verticale (z) du véhicule.

7. Véhicule automobile selon la revendication 6, **caractérisé en ce que** le ressort (11) est disposé, par rapport à une direction longitudinale (x) du véhicule, derrière le centre de la roue (3) et/ou derrière un arbre d'entraînement (9) entraînant la roue (3).

8. Véhicule automobile selon la revendication 6 ou la revendication 7, **caractérisé en ce qu'**il présente un rapport de ressort du ressort compris entre 0,5 et 1, de préférence d'environ 0,7, le rapport de ressort du ressort étant le rapport entre la distance (Dfr) du ressort (11) à l'axe de rotation (15) et la distance (Drr) de la roue (3) à l'axe de rotation (15).

9. Véhicule automobile selon l'une des revendications 7 à 8, **caractérisé en ce que** le ressort (11) est conçu pour être réglable, notamment pneumatiquement ou hydrauliquement.

10. Véhicule automobile selon l'une des revendications précédentes, **caractérisé en ce que** le bras (4) de guidage de roue est disposé dans un plan de guidage inférieur par rapport à la direction verticale (z) du véhicule et le bras de carrossage (7) reliant le porte-roue (2) à la caisse (6) est disposé dans un plan de guidage supérieur par rapport à celui-ci.

11. Véhicule automobile selon l'une des revendications précédentes, **caractérisé en ce que** la biellette intégrale (5) est disposée essentiellement à l'intérieur de la roue (3) .

12. Véhicule automobile selon l'une des revendications précédentes, **caractérisé en ce que** la biellette intégrale (5) est orientée sensiblement dans la direction verticale (z) du véhicule lorsque la roue (3) n'est pas braquée.

13. Véhicule automobile selon l'une des revendications précédentes, **caractérisé en ce que** la biellette intégrale (5) est reliée de manière articulée, par une première liaison (17), au bras (4) de guidage de roue et, par une deuxième liaison (18), au porte-roue (2).

14. Véhicule automobile selon l'une des revendications 6 à 13, **caractérisé en ce que** la roue (3) est apte à être entraînée par un arbre (7) qui s'étend essentiellement dans la direction transversale (y) du véhicule et qui, par rapport à la direction longitudinale (x) du véhicule, s'étend entre le ressort (11) et l'élément de suspension (12).
